# EUROPÄISCHE PATENTSCHRIFT

(11) **EP 1 212 738 B1**
(45) Veröffentlichungstag und Bekanntmachung des Hinweises auf die Patenterteilung: **24.09.2003**
(21) Anmeldenummer: 00958501.9
(22) Anmeldetag: 26.08.2000
(51) Int. Cl.: G08G 1/01

(54) **VERFAHREN ZUR VERKEHRSZUSTANDSÜBERWACHUNG FÜR EIN VERKEHRSNETZ MIT EFFEKTIVEN ENGSTELLEN**
METHOD FOR MONITORING THE CONDITION OF TRAFFIC FOR A TRAFFIC NETWORK COMPRISING EFFECTIVE NARROW POINTS
PROCEDE DE SURVEILLANCE DE L'ETAT DU TRAFIC SUR UN RESEAU ROUTIER COMPRENANT DES REDUCTIONS EFFECTIVES DE TRAFIC

(30) Priorität: 14.09.1999 DE 19944075
(43) Veröffentlichungstag der Anmeldung: 12.06.2002
(73) Patentinhaber: DaimlerChrysler AG, 70567 Stuttgart (DE)
(72) Erfinder: KERNER, Boris, D-70619 Stuttgart (DE)
(74) Vertreter: Lindner-Vogt, Karin L.
(86) Internationale Anmeldenummer: EP0008329
(87) Internationale Veröffentlichungsnummer: WO01020574

(56) Entgegenhaltungen:
- EP-A- 0 884 708
- DE-A- 19 753 034
- DE-A- 19 835 979
- US-A- 4 750 129
- US-A- 5 684 475
- US-A- 5 861 820
- RITTICH D ET AL: "PERSPEKTIVEN DER VERKEHRSLEITTECHNIK" NACHRICHTENTECHNISCHE BERICHTE,DE,ANT NACHRICHTENTECHNIK GMB. BACKNANG, Nr. 9, 1. April 1992 (1992-04-01), Seiten 111-119, XP000331875
- IOKIBE T ET AL: "TRAFFIC PREDICTION METHOD BY FUZZY LOGIC" PROCEEDINGS OF THE INTERNATIONAL CONFERENCE ON FUZZY SYSTEMS,US,NEW YORK, IEEE, Bd. CONF. 2, 28. März 1993 (1993-03-28), Seiten 673-678, XP000371490 ISBN: 0-7803-0614-7
- KERNER B S ET AL: "EXPERIMENTAL PROPERTIES OF COMPLEXITY IN TRAFFIC FLOW" PHYSICAL REVIEW E. STATISTICAL PHYSICS, PLASMAS, FLUIDS, AND RELATED INTERDISCIPLINARY TOPICS,US,AMERICAN INSTITUTE OF PHYSICS, NEW YORK, NY, Bd. 53, 1996, Seiten 4275-4278, XP000882460 ISSN: 1063-651X in der Anmeldung erwähnt

## Beschreibung

Die Erfindung bezieht sich auf ein Verfahren zur Überwachung einschließlich Prognose des Verkehrszustands in einem Verkehrsnetz mit effektiven Engstellen, insbesondere in einem entsprechenden Straßenverkehrsnetz, nach dem Oberbegriff des Anspruchs 1. Unter effektiven Engstellen sind hierbei sowohl Engstellen im eigentlichen Sinn, d.h. eine Verringerung der Anzahl nutzbarer Fahrspuren, als auch Engstellen im weiteren Sinn zu verstehen, die z.B. durch eine oder mehrere einmündende Zufahrtsspuren oder durch eine Kurve, eine Steigung, ein Gefälle, eine Aufteilung einer Fahrbahn in zwei oder mehrere Fahrbahnen, eine oder mehrere Ausfahrten oder eine sich langsam (im Vergleich mit der mittleren Fahrzeuggeschwindigkeit im freien Verkehr) bewegende Engstelle, z.B. durch ein langsam fahrendes Fahrzeug, bedingt sind.

Verfahren zur Überwachung und Prognose des Verkehrszustands auf einem Verkehrsnetz, z.B. einem Straßenverkehrsnetz, sind verschiedentlich bekannt und besonders auch für diverse Telematikanwendungen in Fahrzeugen von Interesse. Ein Ziel dieser Verfahren ist es, aus den an Verkehrsmeßstellen erfaßten Verkehrsmeßdaten eine qualitative Beschreibung des Verkehrszustands an der jeweiligen Meßstelle und deren Umgebung zu gewinnen. Meßstellen in diesem Sinn sind vorliegend sowohl stationär wegenetzseitig installierte Meßstellen als auch bewegliche Meßstellen, wie sie beispielsweise von im Verkehr mitschwimmenden Stichprobenfahrzeugen (sogenannten "floating cars") oder durch eine mittels All-, Raum- oder Luftüberwachung gewonnene Messung des Verkehrsabiaufs repräsentiert werden.

Zur qualitativen Beschreibung des Verkehrszustands ist es bekannt, diesen in verschiedene Phasen einzuteilen, z.B. in eine Phase "freier Verkehr", bei der schnellere Fahrzeuge problemlos überholen können, eine Phase "synchronisierter Verkehr", bei dem kaum Möglichkeiten zum Überholen bestehen, jedoch noch eine hohe Verkehrsstärke vorherrscht, und eine Phase "Stau", bei der die Fahrzeuge nahezu stillstehen und auch die Verkehrsstärke auf sehr niedrige Werte sinkt, siehe z.B. den Zeitschriftenaufsatz B. S. Kerner und H. Rehborn, "Experimental properties of complexity in traffic flow", Physical Review E 53, R 4275, 1996. Unter der Phase synchronisierten Verkehrs ist hierbei sowohl ein Zustand zu verstehen, bei dem dadurch, daß in dieser Phase kaum Möglichkeiten zum Überholen bestehen, alle Fahrzeuge auf verschiedenen Spuren mit sehr ähnlicher, "synchronisierter" Geschwindigkeit fahren, wie dies z.B. insbesondere auf Streckenabschnitten ohne Zu- und Abfahrten der Fall ist, als auch ein Verkehrszustand, bei dem die Geschwindigkeitsverteilung für die Fahrzeuge auf verschiedenen Spuren noch unterschiedlich sein kann, jedoch die Tendenz zur Synchronisierung der Geschwindigkeiten derjenigen Fahrzeuge auf verschiedenen Spuren besteht, die jeweils eine gleiche Route fahren, da bezogen auf eine Fahrtroute kaum Möglichkeiten zum Überholen bestehen. Der Phaseneinteilung liegt die Idee zugrunde, die Phasen so zu wählen, daß jede von ihnen speziellen charakteristischen Eigenschaften des Verkehrsablaufs entspricht, so daß die zeitliche und örtliche Ausdehnung von Streckenabschnitten abgeschätzt werden kann, in denen sich der Verkehrszustand in einer bestimmten Phase befindet. In dem Zeitschriftenaufsatz B. S. Kerner, "Experimental Features of Self-Organization in Traffic Flow", Physical Review Letters, Band 81, Nr. 17, Seite 3797 werden in der Phase "synchronisierter Verkehr" Bereiche "gestauchter synchronisierter Verkehr" (sogenannte "pinch region") ausgewählt und im weiteren besonders behandelt. Dies sind Bereiche innerhalb von synchronisiertem Verkehr, in denen nur sehr niedrige Geschwindigkeiten gefahren werden können und in denen sich spontan kurze Stauzustände bilden, die stromaufwärts wandern und dabei anwachsen können, was dann eventuell zu einem bleibenden Stauzustand führen kann.

Zur Überwachung und Prognose des Verkehrszustands "Stau" sind bereits verschiedene Verfahren bekannt, siehe die in der Offenlegungsschrift DE 196 47 127 A1 beschriebene automatische Staudynamikanalyse und aus der dort genannten Literatur bekannte Methoden.

In der nicht vorveröffentlichten, älteren deutschen Patentanmeldung Nr. 198 35 979.9 ist des weiteren die Überwachung und Prognose von synchronisiertem Verkehr beschrieben, insbesondere die Erkennung des Phasenübergangs zwischen freiem und synchronisiertem Verkehr und eine Prognose über die räumliche Ausdehnung von synchronisiertem Verkehr, indem auf die Position der stromaufwärtigen Flanke desselben dadurch geschlossen wird, daß für eine entsprechende stromaufwärtige Meßstelle spezielle Bedingungen für einen induzierten stromaufwärtigen Phasenübergang vom freien zum synchronisierten Verkehr nicht mehr erfüllt sind oder ein breiter Stau entstanden ist. Insbesondere eignet sich dieses Verfahren dazu, den Beginn einer Phase synchronisierten Verkehrs an einer effektiven Engstelle des Verkehrsnetzes zu erkennen und die zeitliche Entwicklung des sich stromaufwärts von dieser Engstelle bildenden Bereichs synchronisierten Verkehrs zu verfolgen, dessen stromabwärtige Flanke im allgemeinen an der effektiven Engstelle fixiert bleibt. Unter einer an der effektiven Engstelle fixierten Flanke wird dabei eine solche verstanden, die in der Umgebung dieser Engstelle verbleibt, d.h. in der Umgebung einer stationären effektiven Engstelle im wesentlichen stationär verbleibt bzw. sich mit einer beweglichen effektiven Engstelle im wesentlichen synchron mitbewegt. Der Ort der effektiven Engstelle ist somit derjenige, wo sich momentan die stromabwärtige Flanke des synchronisierten Verkehrs befindet.

In der nachveröffentlichten Offenlegungsschrift DE 199 44 077 A1wird ein Verkehrszustandsüberwachungsverfahren beschrieben, bei dem der aktuelle Verkehrszustand hinsichtlich unterschiedlicher Zustandsphasen und besonders hinsichtlich synchronisiertem Verkehr und gestauchtem synchronisiertem Verkehr sowie dem Phasenübergang zwischen Zuständen synchronisierten Verkehrs einerseits und freien Verkehrs andererseits überwacht und bei Bedarf auf dieser Basis der zukünftige Verkehrszustand prognostiziert wird. Insbesondere lassen sich die Flanken von Bereichen synchronisierten Verkehrs mit diesem Verfahren relativ genau für aktuelle Zeitpunkte schätzen bzw. für zukünftige Zeitpunkte prognostizieren, zu denen sich diese nicht an einer Meßstelle, sondern irgendwo zwischen zwei Meßstellen befinden. Bevorzugt findet dabei eine geeignet ausgelegte Fuzzy-Logik Verwendung.

Aus der Offenlegungsschrift EP 0 884 708 A2 ist ein Verfahren zur Prognose des Verkehrszustandes in einem Verkehrsnetz mit Knoten und zwischen diesen verlaufenden Kanten bekannt, bei dem den aktuellen Verkehr, betreffende Detektionsdaten erfasst und an eine Zentrale übermittelt werden, die daraus eine Beschreibung des aktuellen Verkehrszustandes auf dem Verkehrsnetz in Form von jeweils den Zustand in einer Kante oder einem Kantenabschnitt repräsentierenden Verkehrsphasen vornimmt und den Verkehrszustand durch Berechnung zumindest der Bewegungen und zukünftigen Positionen der Verkehrsphasen prognostiziert. Die Phasenbeschreibung erfolgt binär im Form der Phasen "frei" und "gestaut" oder in fünf Stufen in Form der Phasen "frei", "lebhaft", _{"}dicht", "zäh" und "gestaut" oder unter Verwendung einer anderen Anzahl unterschiedlicher Phasen. Zur Prognose werden Phasengrenzengeschwindigkeiten verwendet, die z.B. durch lineare Regression anhand von aktuellen und früheren Detektionsdaten oder als Quotient aus der Differenz des Zu- und Abflusses an der Phasengrenze und der Differenz der Fahrzeugdichte vor und hinter der Phasengrenze berechnet werden.

Der Erfindung liegt als technisches Problem die Bereitstellung eines Verfahrens der eingangs genannten Art zugrunde, mit denen der aktuelle Verkehrszustand speziell auch im Bereich stromaufwärts von effektiven Engstellen vergleichsweise zuverlässig überwacht werden kann und auf dieser Basis bei Bedarf auch eine vergleichsweise zuverlässige Prognose des zukünftigen Verkehrszustands möglich ist.

Die Erfindung löst dieses Problem durch die Bereitstellung eines Verfahrens mit den Merkmalen des Anspruchs 1. Dieses Verfahren zeichnet sich inbesondere dadurch aus, daß der Verkehrszustand stromaufwärts einer jeweiligen effektiven Engstelle des Verkehrsnetzes als ein Muster dichten Verkehrs klassifiziert wird, wenn eine an der betreffenden effektiven Engstelle fixierte Flanke zwischen stromabwärtigem freiem Verkehr und stromaufwärtigem synchronisiertem Verkehr erkannt wird, d.h. wenn sich stromaufwärts der Engstelle dichter Verkehr bildet. Die Musterklassifikation des Verkehrszustands beinhaltet eine Einteilung des Verkehrs stromaufwärts der Engstelle in einen oder mehrere, stromaufwärts aufeinanderfolgende Bereiche unterschiedlicher Zustandsphasenzusammensetzung. Des weiteren beinhaltet die Musterklassifikation ein zustandsphasenabhängiges, zeit- und ortsabhängiges Profil von für die Zustandsphasenermittlung berücksichtigten Verkehrsparameter, wie mittlere Fahrzeuggeschwindigkeit, Verkehrsfluß (auch Verkehrsfluß bezeichnet) und/oder Verkehrsdichte.

Häufig wird bei zunehmendem Verkehr speziell an effektiven Engstellen, bei denen es sich meist um stationäre Engstellen, in manchen Fällen aber auch um bewegliche Engstellen, wie sich sehr langsam bewegende Straßenbau- oder Straßenwartungsfahrzeuge oder Wanderbaustellen, handeln kann, ein vormals freier Verkehrszustand stromaufwärts der Engstelle zunächst in den sogenannten Bereich synchronisierten Verkehrs übergeht und sich daraus je nach weiterem Verkehr ein für die Engstelle typisches Muster dichten Verkehrs ausbildet. Dieses Muster kann in der minimalen Version allein aus dem an die effektive Engstelle stromaufwärts angrenzenden Bereich synchronisierten Verkehrs bestehen. Bei zunehmendem Verkehrsaufkommen und/oder entsprechender Streckeninfrastruktur wird zusätzlich die Bildung eines Bereichs gestauchten synchronisierten Verkehrs beobachtet. Aus diesem können sich Staus entwickeln, die stromaufwärts propagieren, wobei zwischen je zwei Staus freier oder synchronisierter bzw. gestauchter synchronisierter Verkehr vorliegen kann. Der Bereich, in welchem sich die stromaufwärts propagierenden, breiten Staus (im Gegensatz zu den in Bereichen gestauchten synchronisierten Verkehrs auftretenden schmalen Staus) liegen, wird als Bereich "sich bewegende breite Staus" bezeichnet.

Als Resultat dieser Erkenntnisse kann durch das erfindungsgemäße Verfahren bei Erkennung eines sich stromaufwärts einer Engstelle ausbildenden synchronisierten Verkehrs anhand vergleichsweise weniger aktueller oder prognostizierter Verkehrsmeßdaten eine Zuordnung des Verkehrszustands zu einem passenden, für die jeweilige Engstelle typischen Muster getroffen werden. Die weitere Analyse oder Auswertung und speziell auch die Prognose des zukünftig zu erwartenden Verkehrszustands kann dann auf der Basis dieser Mustererkennung mit vergleichsweise wenig zu verarbeitendem Datenmaterial und folglich mit entsprechend geringem Rechenaufwand erfolgen. Ein weiterer wesentlicher Vorteil dieses Verfahrens besteht darin, daß es im Gegensatz zu mathematischen Verkehrszustandsmodellen mit vielen zu validierenden Parametern eine musterbasierte Modellierung ohne zu validierende Parameter beinhaltet.

Ein nach Anspruch 2 weitergebildetes Verfahren ermöglicht die Musterklassifikation des Verkehrszustands auch für den Fall, daß sich ein zunächst an einer effektiven Engstelle entstehendes Muster dichten Verkehrs über eine oder mehrere weitere stromaufwärtige effektive Engstellen hinweg ausgedehnt hat. Es zeigt sich, daß die Musterklassifikation auch für diesen Fall möglich ist und das übergreifende Muster aus denselben Bereichen aufgebaut ist wie ein nur eine effektive Engstelle enthaltendes, einzelnes Muster, d.h. auch das übergreifende Muster besteht aus einer charakteristischen Folge von Bereichen "synchronisierter Verkehr", "gestauchter synchronisierter Verkehr" und "sich bewegende breite Staus".

Bei einem nach Anspruch 3 weitergebildeten Verfahren wird das für eine jeweilige Engstelle zeit- und ortsabhängig ermittelte Muster aus aufgenommenen Verkehrsmeßdaten empirisch bestimmt und abrufbar gespeichert. Dadurch kann der Engstelle zu jedem späteren Zeitpunkt, zu dem dort eine fixierte Flanke zwischen stromabwärtigem freiem Verkehr und stromaufwärtigem synchronisiertem Verkehr erkannt wird, das am besten zu den aktuell aufgenommenen oder für den betreffenden Zeitpunkt prognostizierten Verkehrsmeßdaten passende Musterprofil aus den abgespeicherten Musterprofilen ausgewählt und als aktueller bzw. prognostizierter Verkehrszustand für den entsprechenden Streckenabschnitt des Verkehrsnetzes stromaufwärts der Engstelle verwendet werden.

Bei einem nach Anspruch 4 weitergebildeten Verfahren wird der dichte Verkehrszustand stromaufwärts einer effektiven Engstelle in Abhängigkeit vom Fahrzeugzufluß nach drei Mustervarianten unterschieden, und jedem der drei Varianten wird ein entsprechendes zeit- und ortsabhängiges Musterprofil für einen oder mehrere der wichtigen Verkehrsparameter "mittlere Fahrzeuggeschwindigkeit", "Verkehrsfluß" und "Verkehrsdichte" zugeordnet. Bei einer ersten Variante besteht das Muster nur aus einem Bereich synchronisierten Verkehrs. Bei einer zweiten Variante besteht das Muster zusätzlich aus einem stromaufwärts anschließenden Bereichs gestauchten synchronisierten Verkehrs, und bei einer dritten Mustervariante kommt ein Bereich sich bewegender breiter Staus stromaufwärts des Bereichs gestauchten synchronisierten Verkehrs hinzu. Die zugehörigen, im allgemeinen zeitabhängigen Flankenpositionen zwischen den verschiedenen Musterbereichen werden durch jeweils geeignete Verfahren beispielsweise der eingangs genannten Art ermittelt.

Ein nach Anspruch 5 weitergebildetes Verfahren ermöglicht die Erkennung und Verfolgung übergreifender Muster dichten Verkehrs im betrachteten Verkehrsnetz in Abhängigkeit der Fahrzeugflüsse. Insbesondere können in Abhängigkeit der Fahrzeugflüsse Ort und Zeit der Auslösung eines jeweiligen übergreifenden Musters und die Abfolge der einzelnen Bereiche "synchronisierter Verkehr", "gestauchter synchronisierter Verkehr" und "sich bewegende breite Staus" in jedem übergreifenden Muster ermittelt werden. Des weiteren kann der zeitliche und örtliche Verlauf von stromaufwärts durch Bereiche synchronisierten Verkehrs und/oder gestauchten synchronisierten Verkehrs propagierenden Staus prognostiziert werden, wenn in einem übergreifenden Muster ein Bereich "sich bewegende breite Staus" mit Bereichen synchronisierten Verkehrs und/oder gestauchten synchronisierten Verkehrs überlappt.

In weiterer Ausgestaltung dieser Maßnahme der Flankenpositionsermittlung ist beim Verfahren nach Anspruch 6 eine zeitliche Verfolgung der Positionen diverser Flanken zwischen den verschiedenen Musterbereichen bzw. von Staus in übergreifenden Mustern und/oder die Erkennung neu auftretender übergreifender Muster vorgesehen, so daß die Lage und Ausdehnung jedes der sich in ihrer Zustandsphasenzusammensetzung unterscheidenden Bereiche eines einzelnen oder übergreifenden Musters in der zeitlichen Entwicklung verfolgen läßt.

Bei einem nach Anspruch 7 weitergebildeten Verfahren wird zusätzlich die zur Durchquerung des Streckenabschnitts, in welchem sich das einzelne oder übergreifende Muster des dichten Verkehrs befindet, voraussichtlich benötigte Reisezeit zeitabhängig ermittelt und gespeichert. Die gespeicherten Reisezeitinformationen können dann z.B. direkt im Rahmen eines Verfahrens zur Schätzung aktuell zu erwartender bzw. zur Prognose zukünftig zu erwartender Reisezeiten für das Befahren bestimmter, vorgebbarer Strecken des Verkehrsnetzes genutzt werden.

In einer Weiterbildung des Verfahrens nach Anspruch 8 werden nach Erkennen eines einzelnen oder übergreifenden Musters die Positionen zugehöriger Flanken und der Zufluß zum Muster aktuell erfaßt. Anhand dieser Informationen wird das hierzu am besten passende Musterprofil aus den abgepeicherten Musterprofilen ausgewählt und eine Prognose über die weitere Entwicklung des Musters dichten Verkehrs an der betreffenden effektiven Engstelle durchgeführt. Dies kann insbesondere eine Prognose relevanter Verkehrszustandsparameter, wie mittlere Fahrzeuggeschwindigkeit, Verkehrsfluß und/oder Verkehrsdichte, und bei Bedarf auch der zu erwartenden Reisezeit umfassen.

Vorteilhafte Ausführungsformen der Erfindung sind in den Zeichnungen veranschaulicht und werden nachfolgend beschrieben. Hierbei zeigen:
- Fig. 1: eine schematische Darstellung eines Streckenabschnitts eines Straßenverkehrsnetzes mit einer effektiven Engstelle und eines stromaufwärtigen Musters dichten Verkehrs, das aus einem Bereich synchronisierten Verkehrs besteht,

- Fig. 2: eine Darstellung entsprechend Fig. 1, jedoch für ein Muster dichten Verkehrs, das zusätzlich einen Bereich gestauchten synchronisierten Verkehrs enthält,
- Fig. 3: eine Darstellung entsprechend Fig. 2, jedoch für ein Muster dichten Verkehrs, das zusätzlich einen Bereich sich bewegender breiter Staus enthält,
- Fig. 4: eine schematische Darstellung einer Bestimmung von aktuellen und zukünftigen Verkehrszuständen an einer Meßstelle zur Überwachung und Prognose von Verkehrszuständen einschließlich Mustern dichten Verkehrs stromaufwärts von Engstellen und
- Fig. 5: eine Ansicht entsprechend Fig. 4, jedoch für den Fall einer Positionsbestimmung einer zwischen zwei Meßstellen liegenden Flanke zwischen freiem und synchronisiertem Verkehr.

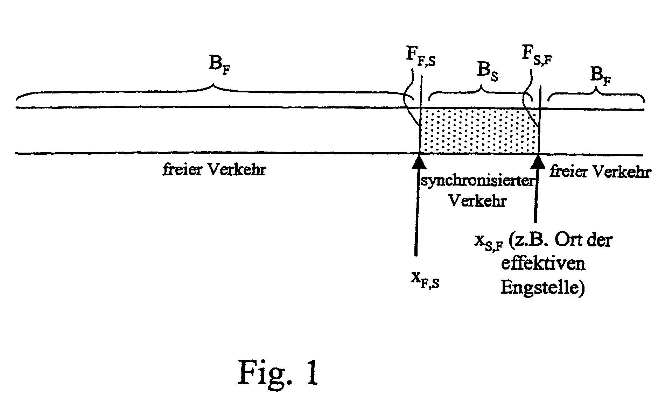

Fig. 1 veranschaulicht beispielhaft einen Streckenabschnitt einer Richtungsfahrbahn eines Straßenverkehrsnetzes, wie z.B. einen Autobahnabschnitt, dessen Verkehrszustand beispielsweise von einer Verkehrszentrale für den aktuellen Zeitpunkt geschätzt, d.h. rechnerisch ermittelt, und für zukünftige Zeitpunkte prognostiziert wird. Zur Erfassung von hierfür dienenden Verkehrsmeßdaten sind je nach Bedarf fest installierte und/oder bewegliche Meßstellen vorgesehen. Die Meßdaten werden von der Verkehrszentrale geeignet empfangen und von einer dortigen Recheneinheit geeignet ausgewertet. Für weitere Implementierungsdetails solcher Verkehrszustandsüberwachungssysteme sei auf die eingangs zitierte Literatur und insbesondere auch auf die dort erwähnte, parallel eingereichte deutsche Patentanmeldung verwiesen.

Charakteristisch für das vorliegende Verkehrszustandsüberwachungssystem ist die Implementierung eines Überwachungsverfahrens, das eine Erkennung typischer Musterprofile dichten Verkehrs stromaufwärts von effektiven Engstellen und eine Klassifizierung derselben umfaßt, anhand der dann eine vergleichsweise einfache und zuverlässige Schätzung des aktuellen Verkehrszustands ebenso wie eine Prognose des zukünftig zu erwartenden Verkehrszustands in diesem Streckenbereich möglich ist.

Fig. 1 zeigt den Beispielfall, daß sich an einer Streckenposition x_{S,F} eine effektive Engstelle befindet und sich durch entsprechend hohes Verkehrsaufkommen eine an dieser fixierte Flanke F_{S,F} zwischen einem stromabwärtigen Bereich B_{F} freien Verkehrs und einem stromaufwärtigen Bereich B_{S} synchronisierten Verkehrs gebildet hat. Die Bildung einer solchen Flanke F_{S,F} läßt sich beispielsweise mit dem in der oben genannten deutschen Patentanmeldung Nr. 198 35 979.9 beschriebenen Verfahren erkennen. Dabei kann es sich um eine räumlich fixierte Engstelle, wie z.B. eine dauerhafte Fahrspurverringerung an dieser Stelle, aber auch um eine bewegliche Engstelle handeln, wie sie z.B. von einer "Wanderbaustelle" oder sehr langsam fahrenden Straßenbaustellenfahrzeugen gebildet werden.

Bei Erkennung einer solchen fixierten Flanke F_{S,F} zwischen stromabwärtigem freiem Verkehr Bp und stromaufwärtigem synchronisiertem Verkehr B_{S} erfolgt dann verfahrensgemäß eine Klassifizierung des Verkehrszustands stromaufwärts der effektiven Engstelle in ein Muster dichten Verkehrs. Dies nutzt die experimentell beobachtete Tatsache aus, daß sich bei erhöhtem Verkehrsaufkommen stromaufwärts von solchen effektiven Engstellen ganz typische Musterprofile dichten Verkehrs ausbilden, d.h. sich der Verkehrszustand dort in gewisse typische Varianten eines Musters dichten Verkehrs klassifizieren läßt.

Eine Behandlung des Verkehrszustands in diesem Bereich als Muster dichten Verkehrs ermöglicht dann eine vergleichsweise zuverlässige Prognose des zukünftigen Verkehrszustands und der zum Durchfahren dieses Bereichs erforderlichen Reisezeit mit relativ geringem Rechenaufwand und relativ wenigen Meßdateninformationen. Dazu wird der jeweiligen effektiven Engstelle, insbesondere zu allen Stellen mit Zufahrten, ein bestimmtes Muster des dichten Verkehrs stromaufwärts derselben auf der Basis von Messungen des Verkehrs, d.h. Messungen von für den Verkehrszustand repräsentativen Verkehrsparametern zugeordnet. Ein solches Muster dichten Verkehrs beinhaltet entsprechende zeit- und ortsabhängige Profile der berücksichtigten Verkehrsparameter, wie der mittleren Fahrzeuggeschwindigkeit, des Verkehrsflusses und/oder der Verkehrsdichte, und bevorzugt auch der dem jeweils vorliegenden Muster entsprechenden Reisezeit. Es zeigt sich, daß diese zeitlich-räumlichen Profile des Musters dichten Verkehrs deutlich, um mehr als ein vorgegebenes Maß, von den entsprechenden Profilen freien Verkehrs abweichen. Des weiteren zeigt sich, daß die dem Muster dichten Verkehrs jeweils zugeordneten zeitlich-räumlichen Profile der berücksichtigten Verkehrsparameter, wie der mittleren Fahrzeuggeschwindigkeit, des Verkehrsflusses und/oder der Verkehrsdichte, und die zum Muster gehörige Reisezeit bei jeder effektiven Engstelle charakteristische Eigenchaften aufweisen. Diese Eigenschaften sind in dem Sinne charakteristisch, daß sie für verschiedene Zeiten, z.B. verschiedene Tageszeiten und/oder verschiedene Tage reproduzierbar und prognostizierbar sind, d.h. daß diese charakteristischen Eigenschaften einschließlich ihrer charakteristischen Zeitabhängigkeit ohne eine Valitierung der Parameter eines verwendeten Verkehrsprognosemodells prognostiziert werden können.

Wie gesagt, besteht im Beispiel von Fig. 1 das Muster dichten Verkehrs allein aus dem Bereich B_{S} synchronisierten Verkehrs mit einer stromabwärtigen Flanke F_{S,F} am Ort X_{S,F} der effektiven Engstelle und einer stromaufwärtigen Flanke F_{F,S}, deren Position X_{F,S} meßtechnisch und rechnerisch erfaßt und in seiner zeitlichen Entwicklung verfolgt wird und an die sich stromaufwärts ein weiterer Bereich B_{F} freien Verkehrs anschließt.

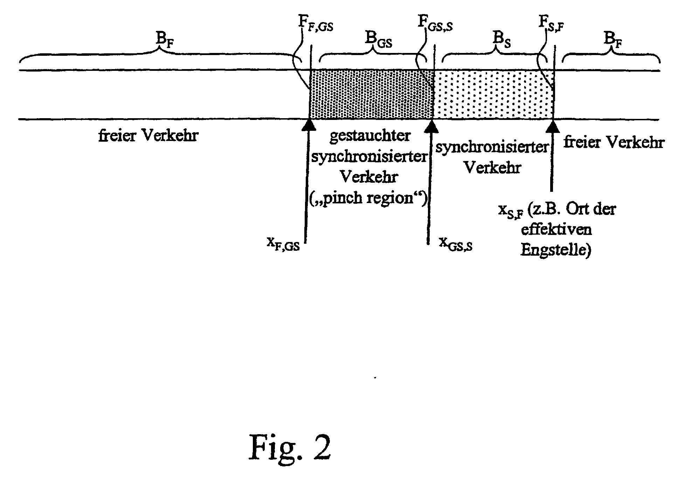

Eine weitere, typischerweise auftretende Variante des Musters dichten Verkehrs ist in Fig. 2 dargestellt und beinhaltet zusätzlich zum Bereich B_{S} synchronisierten Verkehrs einen stromaufwärts an dessen stromaufwärtige Flanke F_{GS,S} anschließenden Bereich B_{GS} gestauchten synchronisierten Verkehrs. Bei einem solchen Bereich "gestauchter synchronisierter Verkehr" ("pinch region" genannt) entstehen in ansonsten synchronisiertem Verkehr schmale Staus, die aber nicht einzeln verfolgt werden. Zur Einteilung des Verkehrszustands in die Zustandsphasen "freier Verkehr", "synchronisierter Verkehr" mit oder ohne Bereiche "gestauchter synchronisierter Verkehr" sowie "Stau" siehe auch die oben genannte DE 199 44 077 A1, in der auch geeignete Maßnahmen zur zeitlichen Verfolgung der Position X_{GS,S} der stromabwärtigen Flanke F_{GS,S} und der Position X_{F,GS} der stromaufwärtigen Flanke F_{F,GS}, an die sich stromaufwärts wiederum ein Bereich B_{F} freien Verkehrs anschließt, angegeben sind.

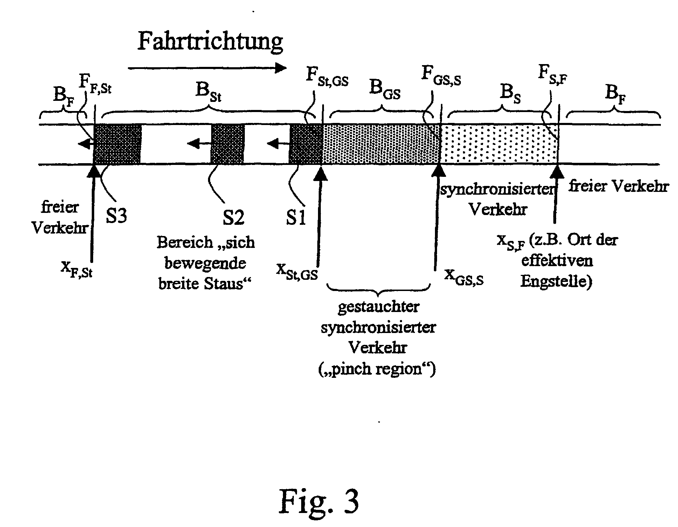

Bei entsprechend hohem Verkehrsaufkommen und/oder entsprechender Streckeninfrastruktur kann sich als weitere Variante in einer vollen Ausprägung ein Muster dichten Verkehrs ausbilden, wie es in Fig. 3 veranschaulicht ist. Dieses umfaßt zusätzlich zu dem Bereich B_{S} synchronisierten Verkehrs und dem daran stromaufwärts anschließenden Bereich B_{GS} gestauchten synchronisierten Verkehrs einen daran stromaufwärts anschließenden Bereich B_{St} sich bewegender breiter Staus, an den sich dann erst wieder ein Bereich B_{F} freien Verkehrs stromaufwärts anschließt. Mit anderen Worten besteht das vorliegend klassifizierte Muster des dichten Verkehrs stromaufwärts einer effektiven Engstelle im allgemeinen aus den drei stromaufwärts aufeinanderfolgenden Bereichen synchronisierten Verkehrs B_{S}, gestauchten synchronisierten Verkehrs B_{GS} und sich bewegender breiter Staus B_{St}, von dem die Fig. 2 bzw. 1 reduzierte Formen zeigen, in denen der Bereich B_{St} "sich bewegende breite Staus" bzw. zusätzlich der Bereich B_{GS} "gestauchter synchronisierter Verkehr" fehlen, was z.B. insbesondere in der Entstehungsphase des vollen Musters von Fig. 3 der Fall ist. Anders gesagt, das volle Muster entsprechend Fig. 3 bildet sich stromaufwärts einer effektiven Engstelle typischerweise in der Reihenfolge der Fig. 1 bis 3 dadurch aus, daß zunächst an der effektiven Engstelle der Bereich B_{S} synchronisierten Verkehrs entsteht, aus dem sich dann stromaufwärts davon, wenn das Verkehrsaufkommen entsprechend hoch bleibt und/oder dies die Infrastruktur des entsprechenden Streckenabschnitts zuläßt, der Bereich B_{GS} gestauchten synchronisierten Verkehrs und eventuell auch der Bereich B_{St} sich bewegender breiter Staus herausbilden.

Der Bereich B_{St} sich bewegender breiter Staus besteht aus einzeln verfolgbaren, stromaufwärts propagierenden breiten Staus, wie z.B. den Staus S1/ 52, S3, von denen der am weitesten stromaufwärts liegende Stau S3 den zum betrachteten Zeitpunkt letzten Stau darstellt. Unter der Zustandsphase "Stau" wird hierbei wie üblich eine sich stromaufwärts bewegende Struktur des Verkehrsstroms verstanden, bei der sich beide Stauflanken entgegen der Fahrtrichtung bewegen. Innerhalb der Zustandphase "Stau" sind sowohl die mittlere Fahrzeuggeschwindigkeit als auch der Verkehrsfluß sehr klein. Häufig bilden sich im Lauf der Zeit mehrere voneinander beabstandete Staus S1, S2, S3 stromaufwärts des Bereiches B_{GS} gestauchten synchronisierten Verkehrs, die dementsprechend den stromaufwärts anschließenden Bereich Bₛₜ "sich bewegende breite Staus" bilden. Zwischen den einzelnen Stauzonen S1 S2, S3 kann der Verkehrszustand die Zustandsphase freien Verkehrs und/oder synchronisierten Verkehrs mit oder ohne Bereiche gestauchten synchronisierten Verkehrs haben. Die Position X_{F,St} der stromaufwärtigen Flanke F_{F,St} des stromaufwärts letzten Staus S3 bildet den Übergang zum stromaufwärts anschließenden Bereich B_{F} freien Verkehrs.

In der Anwendung des vorliegenden Verfahrens werden, um eine Einordnung der Muster zur jeweiligen effektiven Engstelle zu erreichen, zuerst im Verkehrsnetz alle Stellen, wo effektive Engstellen sich befinden, ausgewählt. Danach wird auf der Basis der experimentellen Verkehrsdaten zu jeder effektiven Engstelle je nach Verkehrsaufkommen in der Umgebung der effektiven Engstelle entweder das "volle" Muster bzw. eine der zwei genannten "abgekürzten" Muster zugeteilt. Jedes dieser Muster beinhaltet zusätzlich ein zugehöriges zeit- und/oder ortsabhängiges Profil der verschiedenen Verkehrsparameter, wie z.B. der mittleren Fahrzeuggeschwindigkeit, der Fahrzeugdichte, der Reisezeit usw. Diese zeit- und/oder ortsabhängigen Profile richten sich nicht nur auf das Muster, sondern auch auf die jeweilige effektive Engstelle.

Beim vorliegenden Verkehrsüberwachungsverfahren wird nun vorab, wie oben gesagt, empirisch anhand entsprechender Verkehrsmessungen im Bereich stromaufwärts der jeweiligen effektiven Engstelle das zeitlich-räumliche Profil des für diese Engstelle typischen Musters dichten Verkehrs ermittelt und abgespeichert, insbesondere hinsichtlich der zeitlich-räumlichen Profile der wesentlichen berücksichtigten Verkehrsparameter, wie der mittleren Fahrzeuggeschwindigkeit und/oder des Verkehrsflusses und/oder der Verkehrsdicht. Dazu wird für verschiedene Werte des Zuflusses zur betreffenden Engstelle festgestellt und abgespeichert, ob das Muster zum betreffenden Zeitpunkt nur aus dem Bereich B_{S} synchronisierten Verkehrs entsprechend Fig. 1, aus dem Bereich B_{S} synchronisierten Verkehrs und dem Bereich B_{GS} gestauchten synchronisierten Verkehrs gemäß Fig. 2 oder aus allen drei verschiedenen Musterbereichen B_{S}, B_{GS} und B_{St} gemäß Fig. 3 besteht. Für jede dieser drei Mustervarianten wird das zeitlich-räumliche Profil der mittleren Fahrzeuggeschwindigkeit, des Verkehrsflusses und/oder der Verkehrsdichte zugeordnet und abgespeichert. Zudem wird bevorzugt für jede dieser drei Mustervarianten für die jeweilige effektive Engstelle die zu erwartende Reisezeit ermittelt und gespeichert. Speziell werden für jede Engstelle und für die verschiedenen Zuflüsse zur betreffenden Engstelle die Position x_{S,F} der stromabwärtigen Flanke F_{S,F} des Bereichs B_{S} synchronisierten Verkehrs, d.h. der Ort der effektiven Engstelle, die Position X_{GS,S} der Flanke F_{GS,S} zwischen dem Bereich B_{S} synchronisierten Verkehrs und dem stromaufwärts anschließenden Bereich B_{GS} gestauchten synchronisierten Verkehrs sowie die Position X_{St,GS} der Flanke F_{St,GS} zwischen dem Bereich B_{GS} gestauchten synchronisierten Verkehrs und des stromaufwärts anschließenden Bereichs B_{St} sich bewegender breiter Staus als eine Funktion des Zuflusses zu jeder der genannten Flanken ermittelt und abgespeichert.

Im aktuellen Verkehrszustandsüberwachungsbetrieb wird dann nach Feststellen einer an einer effektiven Engstelle fixierten Flanke F_{S,F} zwischen einen stromabwärtigen Bereich B_{F} freien Verkehrs und einem sich stromaufwärts bildenden Bereichs B_{S} synchronisierten Verkehrs die Position X_{F,S} von dessen stromaufwärtiger Flanke F_{F,S}, an die gemäß Fig. 1 wiederum ein Bereich B_{F} freien Verkehrs anschließt, ermittelt. Zudem wird der Zufluß zu dieser Flanke F_{F,S} oder alternativ dazu der Zufluß zur zugehörigen effektiven Engstelle erfaßt. Anhand dieser Eingangsdaten wird dann aus dem Speicher die dazu am besten passende Mustervariante des dichten Verkehrs ausgewählt und verwendet, insbesondere das zugehörige zeitlich-räumliche Profil der mittleren Fahrzeuggeschwindigkeit, des Verkehrsflusses und/oder der Verkehrsdichte und der zugehörigen zeitabhängigen Reisezeit. Anhand der laufend ermittelten aktuellen Position x_{F,S} der Flanke F_{F,S} zwischen dem Bereich B_{S} synchronisierten Verkehrs und dem stromaufwärts anschließenden Bereich B_{F} freien Verkehrs sowie anhand der Zuflüsse zur jeweiligen Engstelle wird dann ausgehend vom aktuell ausgewählten Musterprofil eine Prognose über die weitere Entwicklung des Musters erstellt. Dies beinhaltet insbesondere eine Prognose darüber, ob sich aus dem anfänglichen Muster gemäß Fig. 1 eine der beiden anderen Mustervarianten gemäß den Fig. 2 und 3 herausbildet bzw. wann und wie sich das Muster dichten Verkehrs wieder bis zum Zustand freien Verkehrs an der betreffenden effektiven Engstelle zurückbildet.

Wenn aktuell oder für die Zukunft prognostiziert das Muster dichten Verkehrs an der jeweiligen Engstelle auch den Bereich B_{GS} gestauchten synchronisierten Verkehrs gemäß Fig. 2 enthält, wird dann auch für diesen Bereich B_{GS} laufend eine Ermittlung der Positionen x_{St,GS}, x_{GS},_{S} der beiden ihn begrenzenden Flanken F_{St,GS}, F_{GS,S} vorgenommen, wie z.B. in der oben genannten, parallelen deutschen Patentanmeldung beschrieben. Zusätzlich wird wiederum der zugehörige Zufluß zur betrachteten Engstelle erfaßt. Aus diesen Ausgangsinformationen wird dann wiederum aus den abgespeicherten Musterprofilen diejenige Mustervariante und das entsprechende zeitlich-räumliche Profil der berücksichtigten Verkehrsparameter und der zu erwartenden Reisezeit aus den gespeicherten Mustern ausgewählt, das am besten zu diesen Eingangsdaten paßt. Auf der Basis des ausgewählten Musterprofils wird dann eine verbesserte Prognose über das zeitlich-räumliche Profil der berücksichtigten Verkehrsparameter, wie insbesondere der mittleren Fahrzeuggeschwindigkeit, des Verkehrsflusses und/oder der Verkehrsdichte, und der zugehörigen zeitabhängigen Reisezeit erstellt.

Wenn das aktuell vorliegende bzw. das prognostizierte Muster auch den Bereich B_{St} sich bewegender breiter Staus enthält, werde die einzelnen dortigen Staus S1 S2, S3 durch ein stromaufwärts der stromaufwärtigen Flanke F_{St,GS} des Bereichs B_{GS} gestauchten synchronisierten Verkehrs angewandtes Verfahren zur dynamischen Stauverfolgung und Prognose, wie es beispielsweise in der oben genannten DE 196 47 127 A1 beschrieben ist, in ihrer zeitlichen Entwicklung verfolgt und bei der Bestimmung der zugehörigen, zu erwartenden Reisezeit entsprechend berücksichtigt.

Es zeigt sich, daß durch das oben beschriebene, erfindungsgemäße Verfahren der Verkehrszustand stromaufwärts von effektiven Engstellen auch bei höherem Verkehrsaufkommen mit relativ geringem Rechenaufwand aktuell geschätzt und für die Zukunft prognostiziert werden kann, in dem von einem Mustererkennungsprozeß Gebrauch gemacht wird, der die empirisch beobachtete Tatsache ausnutzt, daß sich stromaufwärts von solchen effektiven Engstellen bei hohem Verkehrsaufkommen ein charakteristisches Muster des dichten Verkehrs bildet. Dieses umfaßt mindestens einen stromaufwärts an die effektive Engstelle anschließenden Bereich synchronisierten Verkehrs, gegebenenfalls einen stromaufwärts daran anschließenden Bereich gestauchten synchronisierten Verkehrs und in seiner vollen Ausprägung darüber hinaus einen daran anschließenden Bereich sich bewegender breiter Staus. Durch Einsatz geeigneter Berechnungsverfahren lassen sich die Flanken der einzelnen Musterbereiche und die jeweils zugehörigen zeitlich-räumlichen Profile der wesentlichen, für den Verkehrszustand repräsentativen Verkehrsparameter, wie mittlere Fahrzeuggeschwindigkeit, Verkehrsfluß und Verkehrsdichte, sehr zuverlässig schätzen und prognostizieren. Dies bietet des weiteren die Möglichkeit von vergleichsweise zuverlässigen Reisezeitprognosen für Fahrten, die über derartige effektive Engstellen führen.

Während in der obigen Verfahrensbeschreibung der Fall eines sich an einer effektiven Engstelle ohne Beeinflussung weiterer effektiver Engstellen bildenden Musters dichten Verkehrs betrachtet wurde, eignet sich das vorliegende Verfahren auch für den Fall mehrerer in ein Muster dichten Verkehrs involvierter effektiver Engstellen, worauf nachfolgend näher eingegangen wird. Dieser Fall tritt ein, wenn das stromaufwärtige Ende eines zu einer ersten effektiven Engstelle gehörigen Musters die Position einer zweiten effektiven Engstelle erreicht, die der ersten effektiven Engstelle stromaufwärts am nächsten liegt. Je nach Entwicklung des Musters dichten Verkehrs können neben der zweiten eine oder mehrere weitere, stromaufwärts aufeinanderfolgende effektive Engstellen in ein solches ausgedehntes Muster dichten Verkehrs einbezogen sein. Die sich über mehrere effektive Engstellen hinweg erstreckenden Muster dichten Verkehrs seien als "übergreifende" Muster dichten Verkehrs bezeichnet, im Unterschied zu dem als "einzelnes Muster" zu bezeichnenden, nur jeweils eine effektive Engstelle enthaltenden Muster dichten Verkehrs.

Die Entwicklung eines solchen übergreifenden Musters beginnt zu dem Zeitpunkt, zu dem das stromaufwärtige Ende eines zur besagten ersten, stromabwärtigen effektiven Engstelle gehöriges, erstes Muster die Position der am nächsten stromaufwärts liegenden zweiten effektiven Engstelle erreicht. Da die Entstehung synchronisierten Verkehrs aus freiem Verkehr an jeder effektiven Engstelle ein Phasenübergang "erster Ordnung" ist, der durch jede Störung des Verkehrs, die größer als eine kritische Störung ist, entsteht, kann das Eintreffen des stromaufwärtigen Endes des ersten, stromabwärtigen Musters dichten Verkehrs diesen Phasenübergang auslösen. Dieser Phasenübergang tritt auf, wenn bedingt durch das Verkehrsaufkommen und die Streckeninfrastruktur der Zustand freien Verkehrs an der stromaufwärtigen effektiven Engstelle ohnehin schon labil war, so daß dort das Eintreffen des stromaufwärtigen Endes des zur ersten effektiven Engstelle gehörigen Musters dichten Verkehrs den Phasenübergang "triggert". Als Resultat dieses Phasenübergangs bildet sich dann stromaufwärts der stromaufwärtigen, zweiten effektiven Engstelle wiederum ein Bereich synchronisierten Verkehrs bzw. gestauchten synchronisierten Verkehrs.

Dieser letztgenannte Bereich verknüpft sich für den Fall, daß das an der stromaufwärtigen effektiven Engstelle eintreffende Muster dichten Verkehrs von einer der in den Fig. 1 und 2 gezeigten, reduzierten Formen ist, mit dessen Bereich synchronisierten Verkehrs bzw. gestauchten synchronisierten Verkehrs, so daß sich ein übergreifendes Muster bildet, das als neu entstehendes, beiden effektiven Engstellen gemeinsam zugeordnetes Muster betrachtet wird und sich weiter analog zu einem "einzelnen" Muster entwickelt. Die Entwicklung des übergreifenden Musters, d.h. die zeitliche und räumliche Entwicklung der Flanken der verschiedenen Musterbereiche, ist dabei dann von den Eigenschaften beider einbezogener effektiver Engstellen abhängig. Das den beiden Engstellen zugeteilte übergreifende Muster wird, wie im Fall des "einzelnen" Musters, mit dem entsprechenden zeitund/oder ortsabhängigen Profil der verschiedenen berücksichtigten Verkehrsparameter gespeichert und bei der weiteren Verkehrszustandsüberwachung und -prognose berücksichtigt.

Die geschilderte Prozedur der Einbeziehung einer jeweils nächsten stromaufwärtigen effektiven Engstelle, die von einem stromabwärtigen Muster dichten Verkehrs erreicht wird, wird für alle effektiven Engstellen sukzessive von einer zur nächsten effektiven Engstelle stromaufwärts durchgeführt. Dadurch können zu einem Verkehrsnetz ein oder mehrere übergreifende Muster zugeteilt werden, die in manchen Fällen eine beträchtliche Ausdehnung von z.B. mehreren zehn oder sogar hundert Kilometern erreichen können. Jedes übergreifende Muster besteht aus einer Folge von vollständigen Einzelmustern entsprechend Fig. 3 und/oder reduzierten Mustern entsprechend den Fig. 1 und 2. Außerdem kann ein übergreifendes Muster auch eine Form haben, bei der ein Bereich "sich bewegende breite Staus", der in einem stromabwärts liegenden Muster dichten Verkehrs entstanden ist, mit einem Bereich synchronisierten Verkehrs und/oder gestauchten synchronisierten Verkehrs in einem stromaufwärts liegenden Muster dichten Verkehrs überlappt. Dies ist dadurch möglich, daß sich bewegende breite Staus sowohl durch synchronisierten Verkehr als auch durch gestauchten synchronisierten Verkehr frei stromaufwärts durchlaufen. Außerdem ist die Geschwindigkeit der stromabwärtigen Flanke jedes sich bewegenden breiten Staus eine charakteristische Größe, deren mittlerer Wert davon unabhängig ist, ob ein sich bewegender breiter Stau durch freien Verkehr oder durch synchronisierten Verkehr oder durch gestauchten synchronisierten Verkehr durchläuft.

Da mehrere Bereiche sich bewegender breiter Staus verschiedener "voller" Muster dichten Verkehrs zu entsprechenden effektiven Engstellen gleichzeitig entstehen können, können mehrere Überlappungen der verschiedenen Bereiche sich bewegender breiter Staus mit Bereichen synchronisierten Verkehrs und/oder gestauchten synchronisierten Verkehrs in einem übergreifenden Muster existieren. Dabei bewegen sich die Staus in jedem Bereich "sich bewegende breite Staus" stets stromaufwärts und können mit einem der oben erwähnten herkömmlichen Stauverfolgungsverfahren in ihrer zeitlichen Entwicklung beobachtet werden, wodurch dementsprechend der zeitliche Verlauf der Überlappungen verfolgt werden kann. Diese Informationen über die zeitliche Veränderung des übergreifenden Musters durch die Bewegung der verschiedenen Staus werden ebenfalls als zum übergreifenden Muster dichten Verkehrs gehörig gespeichert und können durch entsprechenden Abruf des übergreifenden Musters für eine Prognose des Verkehrs im betrachteten Verkehrsnetz berücksichtigt werden.

Diese Vorgehensweise basiert auf der Erkenntnis, daß sich Staus als eigene verkehrliche Objekte stromaufwärts durch den Verkehr mit den Zustandsphasen freien Verkehrs oder synchronisierten Verkehrs hindurchbewegen. Wenn somit ein Bereich sich bewegender breiter Staus eines zu einer oder mehreren stromabwärtigen effektiven Engstellen gehörigen Musters dichten Verkehrs an einer stromaufwärtigen effektiven Engstelle ankommt, bewegen sich dessen breite Staus einfach weiter über die stromaufwärtige effektive Engstelle hinweg. Sie können dort allerdings, wenn die hierzu nötigen Voraussetzungen hinsichtlich Verkehrsaufkommen und Engstellencharakteristik erfüllt sind, den Phasenübergang von freiem zu synchronisiertem Verkehr auslösen, falls noch kein synchronisierter Verkehr vorgelegen hat. Dieser Phasenübergang tritt deshalb relativ leicht auf, weil der maximale Verkehrsfluß über die Engstelle hinweg im Zustand synchronisierten Verkehrs niedriger ist als im Zustand freien Verkehrs. Bei freiem Verkehr mit genügend hohem Verkehrsfluß wird daher schon durch eine kleinere Verkehrsstörung, wie sie beispielsweise ein durchlaufender breiter Stau darstellt, in den Zustand synchronisierten Verkehrs "getriggert".

Wenn nun ein Bereich sich bewegender breiter Staus als stromaufwärtiger Bereich eines "vollen" einzelnen Musters oder als entsprechender Teilbereich eines übergreifenden Musters mit seinem stromaufwärtigen Ende die stromaufwärts benachbarte effektive Engstelle erreicht und dort die Bildung synchronisierten Verkehrs ausgelöst hat, kann es stromaufwärts von dieser Engstelle wiederum zur Bildung eines einzelnen oder übergreifenden Musters mit den Strukturen gemäß den Fig. 1 bis 3 kommen, wenn dies durch das Verkehrsaufkommen und die Streckeninfrastruktur induziert ist, wobei sich diese Musterbildung praktisch unabhängig von der Musterstruktur an stromabwärts liegenden effektiven Engstellen vollziehen bzw. weiterentwickeln kann.

Die Entstehung von Bereichen synchronisierten Verkehrs bzw. gestauchten synchronisierten Verkehrs sowie von Bereichen sich bewegender breiter Staus läßt sich aus folgenden Überlegungen verstehen und erkennen. Im freien Verkehr ist im Mittel der gesamte Verkehrsabfluß Q am Querschnitt einer jeweiligen effektiven Engstelle gleich groß wie der gesamte stromaufwärtige Netto-Verkehrszufluß Qn zur Lokalisierungsstelle der effektiven Engstelle unter Berücksichtigung aller Zu- und Abfahrten im betreffenden Bereich. Die Lokalisierungsstelle einer effektiven Engstelle ist hierbei diejenige Stelle, wo die stromabwärtige Flanke zwischen synchronisiertem Verkehr, der durch die Existenz dieser effektiven Engstelle entsteht, und freiem Verkehr stromabwärts davon lokalisiert ist. Mit anderen Worten ist dieser Netto-Verkehrszufluß zur effektiven Engstelle der gesamte Verkehrsfluß aller Fahrzeuge, welche die zugehörige Lokalisierungsstelle von allen möglichen Richtungen kommend durchfahren müssen. Nun ist der Verkehrsfluß am Querschnitt einer jeden effektiven Engstelle in der Zustandsphase synchronisierter Verkehr auf einen gewissen maximalen Verkehrsfluß Qₛₘₐₓ begrenzt, der mit steigendem LKW-Anteil im Verkehrsfluß sinkt. Wenn daher während eines Zeitraums Δt größer als ein gewisser erster Mindestzeitraum Δt₁ der Netto-Verkehrszufluß Qn im Mittel um mehr als ein gewisser erster Überschußwert ΔQ₁ über dem maximalen Verkehrsfluß Qₛₘₐₓ der Zustandsphase synchronisierten Verkehrs liegt, müssen die "überschüssigen" Fahrzeuge, deren Anzahl sich als entsprechendes Zeitintegral über die Flußdifferenz ergibt, stromaufwärts von der Lokalisierungsstelle der effektiven Engstelle "gespeichert" werden.

Dies ist der Grund, warum in der Zustandsphase synchronisierten Verkehrs ein Bereich gestauchten synchronisierten Verkehrs entstehen kann, in welchem diese überschüssigen Fahrzeuge in den typischen temporären "schmalen" Staus gespeichert sind. Das angegebene Kriterium Qn-Qₛₘₐₓ ≥ ΔQ₁ für ein Zeitintervall Δt≥Δt₁ ist somit als Kriterium für die Entstehung der reduzierten Musterform gemäß Fig. 2 verwendbar und dann am genauesten, wenn der Nettozufluß Qn freiem Verkehr stromaufwärts der stromaufwärtigen Flanke F_{F,S} synchronisierten Verkehrs gemäß Fig. 1 für jede Zuund Abflußrichtung entspricht.

Wenn im Mittel die Differenz Qn-Qₛₘₐₓ während eines Zeitraums Δt größer gleich einem zweiten Mindestzeitraum Δt₂ über einem zweiten Überschußwert ΔQ₂ liegt, wobei der zweite Überschußwert ΔQ₂ größer als der erste Überschußwert ΔQ₁ und/oder das zweite Mindestzeitintervall Δt₂ größer als das erste Mindestzeitintervall ΔQ₁ ist, müssen noch mehr überschüssige Fahrzeuge stromaufwärts der Lokalisierungsstelle der effektiven Engstelle gespeichert werden, weshalb stromaufwärts des Bereichs gestauchten synchronisierten Verkehrs der Bereich sich bewegender breiter Staus entsteht. In diesem Fall sind die überschüssigen Fahrzeuge nicht nur in temporären schmalen, sondern auch in bleibenden breiten Staus gespeichert. Dieses Kriterium läßt sich daher zur Erkennung einer Entstehung des vollen Musters gemäß Fig. 3 verwenden und ist dann am exaktesten, wenn der gesamte Nettozufluß Qn freiem Verkehr stromaufwärts der stromaufwärtigen Flanke F_{F,GS} des Bereichs gestauchten synchronisierten Verkehrs gemäß Fig. 2 wiederum für jede Zu- und Abflußrichtung entspricht.

Alternativ kann ein anderes Kriterium für die Entstehung des Bereiches sich bewegender breiter Staus stromaufwärts des Bereiches gestauchten synchronisierten Verkehrs formuliert werden. Dieses Kriterium basiert auf der Tatsache, daß an einer Zu- bzw. Abflußrichtung "j" der Bereich sich bewegender breiter Staus stromaufwärts des Bereichs gestauchten synchronisierten Verkehrs entsteht, wenn der gesamte zugehörige Nettozufluß Qnⱼ dieser Richtung "j" im freien Verkehr stromaufwärts der stromaufwärtigen Flanke F_{F,GS} gestauchten synchronisierten Verkehrs gemäß Fig. 2 groß genug im Vergleich zum mittleren gesamten Fluß Q_{nout,j} in dieser Richtung "j" stromabwärts von schmalen Staus des Bereichs gestauchten synchronisierten Verkehrs ist. Dieses alternative Kriterium schließt folglich auf die Entstehung des Bereiches sich bewegender breiter Staus stromaufwärts des Bereiches gestauchten synchronisierten Verkehrs, wenn im Mittel die Differenz Qnⱼ-Q_{nout,j} für einen Zeitraum Δt von mindestens einer zugehörigen dritten Mindestdauer Δt₃ größer gleich einem zugehörigen dritten Überschußwert ΔQ₃ ist. Dabei sind für die drei beschriebenen Fälle die drei Mindestdauern Δt₁, Δt₂, Δt₃ ebenso wie die drei Überschußwerte ΔQ₁, ΔQ₂, ΔQ₃ für die jeweilige effektive Engstelle bzw. für die jeweilige Gruppe effektiver Engstellen, die für ein übergreifendes Muster verantwortlich sind, vorgegebene Größen, während der maximale Verkehrsfluß Qₛₘₐₓ im synchronisierten Verkehr und der mittlere gesamte Fluß Q_{nout,j} stromabwärts von schmalen Staus einer Richtung "j" Größen sind, deren Werte für jede effektive Engstelle aus experimentellen Verkehrsdaten zu bestimmen sind.

Ein übergreifendes Muster, das mit seinem zeitlichen und örtlichen Verlauf gespeichert und durch Abruf für eine Verkehrsprognose benutzt werden kann, kann nicht nur durch Überlappungen von Bereichen sich bewegender breiter Staus mit Bereichen synchronisierten Verkehrs und/oder gestauchten synchronisierten Verkehrs und mit der Bewegung der Staus entstehen, sondern mindestens durch die beiden folgenden Prozesse realisiert werden.

In einem ersten Fall erreicht zuerst das stromaufwärtige Ende eines Musters dichten Verkehrs im Laufe der Zeit die Stelle der nächsten stromaufwärtsliegenden effektiven Engstelle, wonach später das stromaufwärtige Ende des von der letzteren effektiven Engstelle als stromaufwärtiger Teil des sich weiter ausdehnenden übergreifenden Musters gebildeten Teilmusters dichten Verkehrs eine nächste stromaufwärts liegende Engstelle erreicht usw. Dieser Vorgang kann stundenlang andauern und prognostiziert werden, da die Entwicklung jedes einzelnen Musters an jeder effektiven Engstelle als Teil des übergreifenden Musters prognostizierbar ist. Der entsprechende Verlauf dieses Prozesses der Entstehung und der weiteren zeitlichen und örtlichen Entwicklung des übergreifenden Musters wird gespeichert und steht abrufbar für eine Verkehrsprognose im Verkehrsnetz zur Verfügung.

Als zweiter Fall kann es sein, daß der zuvor beschriebene Prozeß der Entstehung eines übergreifenden Musters dadurch unterbrochen wird, daß das Verkehrsaufkommen in der Umgebung der nächsten stromaufwärtigen effektiven Engstelle für eine dortige Entstehung eines Musters dichten Verkehrs zu niedrig ist. Einige sich bewegende Staus können jedoch trotzdem an einer weiter stromaufwärts liegenden effektiven Engstelle noch einmal ein dieser Engstelle entsprechendes Muster dichten Verkehrs auslösen. Die Staus können, da sie stromaufwärts propagieren, in relativ großer Entfernung von z.B. mehreren Kilometern stromaufwärts desjenigen Musters dichten Verkehrs bzw. der zugehörigen effektiven Engstelle liegen, wo sie im zugehörigen Bereich sich bewegender breiter Staus ursprünglich entstanden sind. Sie können sich daher unabhängig von der zeitlichen und örtlichen Entwicklung des übrigen Musters dichten Verkehrs bewegen und folglich unabhängig davon, ob das zugehörige Muster dichten Verkehrs im übrigen noch existiert oder nicht, neue "volle" bzw. "reduzierte" oder auch "übergreifende" Muster an verschiedenen stromaufwärtigen Engstellen auslösen. Alle diese Vorgänge können für eine Prognose der Entstehung eines oder mehrerer einzelner Muster dichten Verkehrs und/oder eines oder mehrerer übergreifender Muster dichten Verkehrs abrufbar abgespeichert werden.

Es sei angemerkt, daß die oben beschriebenen Musterbildungsprozesse nicht lediglich eindimensional zu verstehen sind, sondern auch zweidimensionale Musterbildungsprozesse auf dem zweidimensionalen Verkehrsnetz umfassen, indem sich beispielsweise ein oder mehrere Muster dichten Verkehrs stromaufwärts über entsprechende Zufahrten verzweigen, d.h. sich stromaufwärts auf mehrere Streckenabschnitte des Verkehrsnetzes ausdehnen, so daß sich letztlich ein zweidimensionales, verzweigtes Muster dichten Verkehrs ausbilden kann.

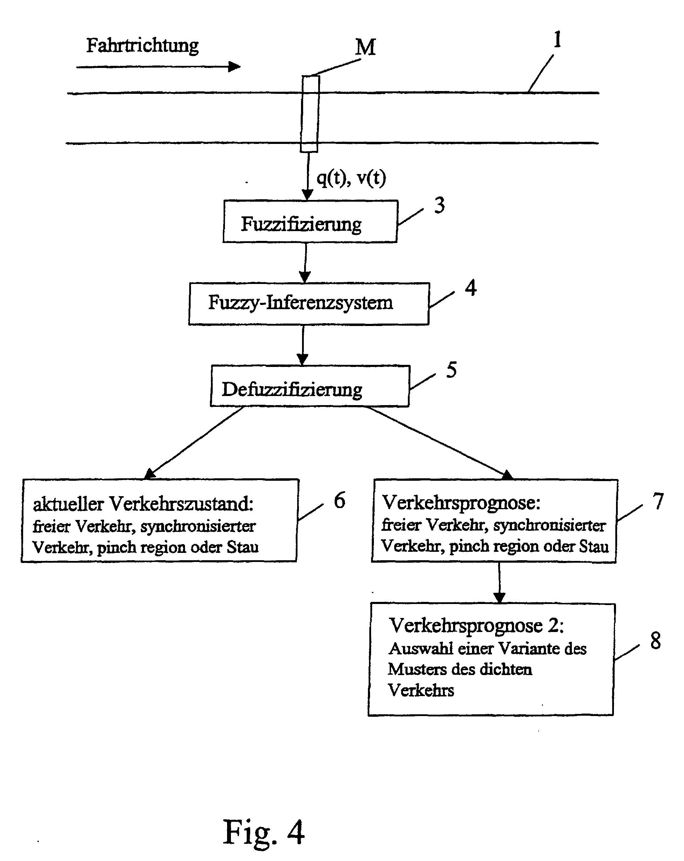

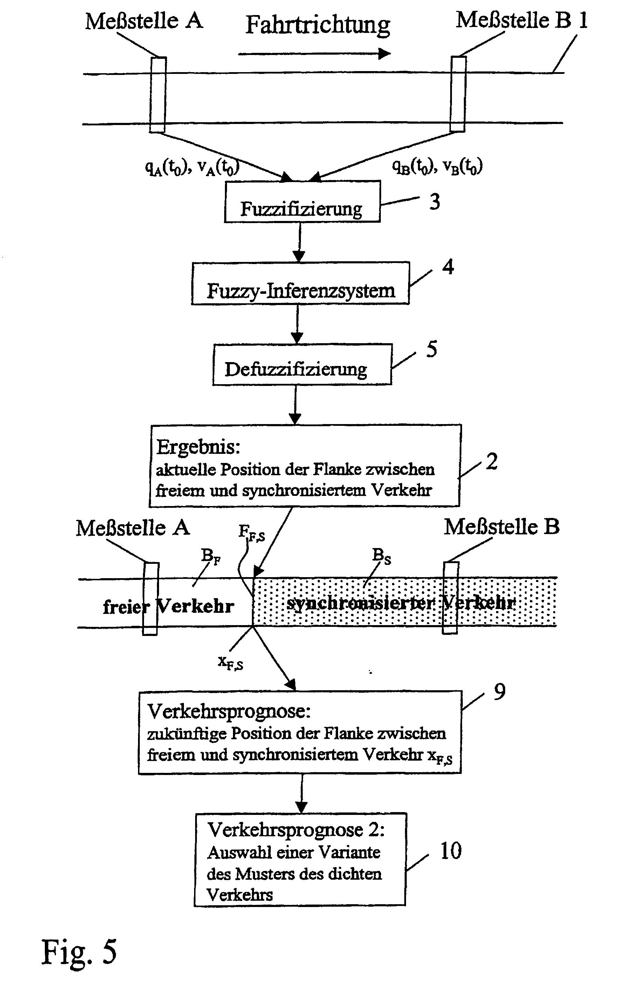

In den Fig. 4 und 5 sind zwei Anwendungsbeispiele für das vorliegende Verfahren kombiniert mit dem in der erwähnten DE 199 44 077 A1 beschriebenen Verfahren dargestellt. Im Fall von Fig. 4 handelt es sich um die Klassifikation des aktuellen und zukünftigen Verkehrszustands an einer Meßstelle M der Richtungsfahrbahn 1, z.B. einer Autobahn oder Schnellstraße. An der Meßstelle M werden laufend, d.h. zeitabhängig, die Verkehrsstärke q(t) und die mittlere Fahrzeuggeschwindigkeit v(t) gemessen und einer Verkehrszentrale zur Auswertung durch ein Fuzzy-Logik-System zugeführt. Dieses beinhaltet eine Einheit 3 zur Fuzzifizierung der Eingangsgrößen, ein Fuzzy-Inferenzsystem 4 zur Ableitung unscharfer Ergebniswerte durch die Anwendung von vorgebbaren Fuzzy-Regeln auf die fuzzifizierten Eingangsgrößen und eine Einheit 5 zur Defuzzifizierung der unscharfen Ergebniswerte, d.h. zur Bildung eines scharfen Ergebniswertes. Als Ergebnis wird für den aktuellen Verkehrszustand der betrachteten Meßstelle M genau einer der Werte "freier Verkehr", "synchronisierter Verkehr", "gestauchter Bereich im synchronisierten Verkehr" oder "Stau" ausgegeben, siehe Block 6 in Fig. 4. Bei Verwendung prognostizierter statt aktueller Werte der Verkehrsstärke q(t) und der mittleren Geschwindigkeit v(t) gibt das Fuzzy-Logik-System als Ergebnis den für diesen zukünftigen Zeitpunkt prognostizierten Verkehrszustand an der Meßstelle M aus, siehe Block 7 von Fig. 4. Insoweit ist die Vorgehensweise in der erwähnten DE 199 44 077 A1 beschrieben, worauf verwiesen werden kann.

Das vorliegende Verfahren baut darauf auf und sieht zusätzlich eine weitergehende Verkehrsprognose vor, die auf den gemäß Block 7 von Fig. 4 erhaltenen Prognoseinformationen basiert. Speziell wird hierbei für Streckenabschnitte stromaufwärts von effektiven Engstellen des Verkehrsnetzes der Verkehrszustand in der oben erläuterten Weise hinsichtlich des typischen Musters dichten Verkehrs klassifiziert und das am besten passende Muster aus den abgespeicherten Mustervarianten und zugehörigen Profilen auswählt, wenn die Meßstelle M eine effektive Engstelle bildet und sich stromaufwärts davon aufgrund eines entsprechend hohen Verkehrsaufkommens dichter Verkehr bildet, wie durch einen Block 8 veranschaulicht.

Fig. 5 zeigt ein weitgehend zu demjenigen der Fig. 4 analoges Verfahrensbeispiel, das zusätzlich die Erkennung der stromaufwartigen Flanke F_{F,S} eines jeweiligen Bereichs B_{S} synchronisierten Verkehrs auch für Positionen X_{F,S} zwischen zwei Meßstellen A, B ermöglicht, einschließlich einer Prognose dieser Flankenposition X_{F,S} auch in solchen Zwischenbereichen, siehe Block 9 von Fig. 5. Insoweit kann wiederum auf die Beschreibung dieser Funktionalität in der erwähnten DE 199 44 077 A1 verwiesen werden. Das vorliegende Verfahrensbeispiel setzt darauf auf und leistet nun anhand der gemäß Block 9 erhaltenen Prognosedaten über die Ausdehnung und Lage eines jeweiligen Bereichs B_{S} synchronisierten Verkehrs eine weitergehende Verkehrsprognose des sich dort und im Bereich stromaufwärts davon bildenden dichten Verkehrs gemäß der oben erläuterten Erkennung und zeitlichen Verfolgung des zugehörigen typischen Musters dichten Verkehrs,
wenn der dichte Verkehr auf eine effektive Engstelle zurückzuführen ist, an deren Umgebung eine stromabwärtige Flanke des Bereichs B_{S} synchronisierten Verkehrs fixiert bleibt. Wie in Block 10 von Fig. 5 angegeben, wird zu diesem Zweck anhand der prognostizierten Verkehrsdaten für diesen Streckenabschnitt die am besten dazu passende aus den abgespeicherten Mustervarianten dichten Verkehrs ausgewählt, die dann für weitere Auswertezwecke und insbesondere Prognosezwecke herangezogen wird.

Es versteht sich, daß sich die vorstehend anhand der Fig. 4 und 5 beschriebene Vorgehensweise nicht nur zur Ermittlung von aktuellen und Prognose von zukünftigen Einzelmustern dichten Verkehrs, in die nur jeweils eine effektive Engstelle involviert ist, sondern auch von aktuellen bzw. zukünftigen "übergreifenden" Mustern dichten Verkehrs, in die jeweils mehrere effektive Engstellen involviert sind, wie oben erläutert, verwenden läßt. In diesem Fall wird das Verfahren parallel für die mehreren involvierten effektiven Engstellen eines jeweiligen übergreifenden Musters angewandt.

## Patentansprüche

1. Verfahren zur Überwachung des Verkehrszustands in einem Verkehrsnetz mit einer oder mehreren effektiven Engstellen, insbesondere in einem Straßenverkehrsnetz, bei dem
- der Verkehrszustand unter Berücksichtigung von aufgenommenen Verkehrsmeßdaten eines oder mehrerer Verkehrsparameter, die wenigstens Informationen über die Verkehrsstärke und/oder die mittlere Fahrzeuggeschwindigkeit umfassen, in jeweils eine von mehreren Zustandsphasen klassifiziert wird, die mindestens die Zustandsphasen "freier Verkehr" und "synchronisierter Verkehr" umfassen,
**dadurch gekennzeichnet**, d a β
- der Verkehrszustand stromaufwärts von einer jeweiligen effektiven Engstelle des Verkehrsnetzes, wenn eine bei dieser fixierte Flanke (F_{S,F}) zwischen stromabwärtigem freiem Verkehr (B_{F}) und stromaufwärtigem synchronisiertem Verkehr (B_{S}) erkannt wird, als ein für die jeweilige effektive Engstelle repräsentatives Muster dichten Verkehrs klassifiziert wird, das einen oder mehrere verschiedene, stromaufwärts aufeinanderfolgende Bereiche (B_{S}, B_{GS}, B_{St}) unterschiedlicher Zustandsphasenzusammensetzung und ein zugehöriges Profil der für die Zustandsphasenermittlung berücksichtigten Verkehrsparameter beinhaltet.

2. Verfahren nach Anspruch 1, weiter
**dadurch gekennzeichnet, daß**
der Verkehrszustand, wenn ein sich zunächst an einer zugehörigen, effektiven Engstelle entstandenes einzelnes Muster dichten Verkehrs eine oder mehrere stromaufwärts folgende effektive Engstellen erreicht, in diesem Streckenabschnitt als ein für die einbezogenen effektiven Engstellen repräsentatives übergreifendes Muster dichten Verkehrs klassifiziert wird, das wie ein jeweiliges einzelnes Muster einen oder mehrere verschiedene, stromaufwärts aufeinanderfolgende Bereiche unterschiedlicher Zustandsphasenzusammensetzung und ein zugehöriges Profil der für die Zustandsphasenermittlung berücksichtigten Verkehrsparameter beinhaltet.

3. Verfahren nach Anspruch 1 oder 2, weiter
**dadurch gekennzeichnet, daß**
das jeweilige, zu einer oder als übergreifendes Muster gemeinsam zu mehreren effektiven Engstellen gehörige Muster dichten Verkehrs mit seinem zeit- und ortsabhängigen Verkehrsparameterprofil aus aufgenommenen Verkehrsmeßdaten empirisch bestimmt und abrufbar gespeichert wird.

4. Verfahren nach einem der Ansprüche 1 bis 3, weiter
**dadurch gekennzeichnet, daß**
für die jeweilige Engstelle in Abhängigkeit vom Fahrzeugzufluß festgestellt wird, ob das Muster nur aus einem Bereich (B_{S}) synchronisierten Verkehrs oder aus diesem und einem stromaufwärts anschließenden Bereich (B_{GS}) gestauchten synchronisierten Verkehrs oder aus diesen beiden Bereichen und einem stromaufwärts anschließenden Bereich (B_{St}) sich bewegender breiter Staus besteht, die zugehörigen Flankenpositionen zwischen den jeweiligen verschiedenen Zustandsphasen ermittelt wird und jeder der drei Mustervarianten ein entsprechendes zeit- und ortsabhängiges Profil der mittleren Fahrzeuggeschwindigkeit und/oder des Verkehrsflusses und/oder der Verkehrsdichte zugeordnet wird.

5. Verfahren nach einem der Ansprüche 2 bis 4, weiter
**dadurch gekennzeichnet**, d a β
für das Verkehrsnetz in Abhängigkeit der Fahrzeugflüsse festgestellt wird, wo und in welcher zeitlichen Folge übergreifende Muster entstehen, in welcher zeitlichen und örtlichen Folge die Bereiche "synchronisierter Verkehr", "gestauchter synchronisierter Verkehr" und "sich bewegende breite Staus" in jedem der übergreifenden Muster entstehen und sich entwickeln und ob Überlappungen solcher Bereiche stattfinden, und für eine jeweilige Überlappung der zeitliche und örtliche Verlauf von Staus durch Bereiche synchronisierten Verkehrs und/oder gestauchten synchronisierten Verkehrs hindurch prognostiziert wird.

6. Verfahren nach Anspruch 4 oder 5, weiter
**dadurch gekennzeichnet**, d a β
die Flankenpositionen (F_{F,S}, F_{GS,S}, F_{F,GS}, F_{St,GS}) der verschiedenen Bereiche des jeweiligen Musters dichten Verkehrs und/oder die Flankenpositionen von Staus innerhalb verschiedener übergreifender Muster und/oder das Auftreten eines jeweils neuen übergreifenden Musters in der zeitlichen Entwicklung aktuell geschätzt und für zukünftige Zeitpunkte prognostiziert werden.

7. Verfahren nach einem der Ansprüche 4 bis 6, weiter
**dadurch gekennzeichnet, daß**
für das jeweilige einzelne oder übergreifende Muster dichten Verkehrs zusätzlich die zugehörige, zu erwartende Reisezeit aktuell geschätzt und/oder für zukünftige Zeitpunkte prognostiziert wird.

8. Verfahren nach einem der Ansprüche 4 bis 7, weiter
**dadurch gekennzeichnet, daß**
für das jeweilige einzelne oder übergreifende Muster dichten Verkehrs der aktuelle Fahrzeugzufluß erfaßt und die aktuellen Positionen der Flanken zwischen den verschiedenen Musterbereichen bestimmt und anhand dieser aktuellen Eingangsdaten das bestpassende Musterprofil aus den abgespeicherten Musterprofilen ausgewählt und einer Prognose des zukünftigen Verkehrszustands im betreffenden Streckenbereich zugrundegelegt wird.

## Claims

1. Method for monitoring the traffic state in a traffic network including one or more effective bottlenecks, in particular in a road traffic network, wherein
- the traffic state is classified in one of several state phases including at least the state phases "free traffic" and "synchronised traffic" on the basis of recorded traffic measurement data of one or more traffic parameters including at least information on traffic load and/or average vehicle speed,
**characterised in that**
- the traffic state is classified upstream of an effective bottleneck, when a flank (F_{S,F}) fixed there is detected between downstream free traffic (B_{F}) and upstream synchronised traffic (B_{S}), as a pattern of dense traffic representative for the effective bottleneck in question and including one or more consecutive upstream regions (B_{S}, B_{GS}, B_{St}) of varying state phase composition and an associated profile of the traffic parameters taken into account in determining the state phases.

2. Method according to claim 1, further
**characterised in that** the traffic state, when an individual pattern of dense traffic initially originating at an associated effective bottleneck reaches one or more upstream effective bottlenecks, is classified in this route section as an overlapping pattern of dense traffic representative for the included effective bottlenecks and, like any individual pattern, including one or more consecutive upstream regions of varying state phase composition and an associated profile for the traffic parameters taken into account in determining the state phases.

3. Method according to claim 1 or 2, further
**characterised in that** the pattern of dense traffic associated with one effective bottleneck or, as an overlapping pattern, with several effective bottlenecks is empirically determined from recorded measurement data with its time- and location-dependent traffic parameter profile and retrievably stored.

4. Method according to any of claims 1 to 3, further
**characterised in that** for each bottleneck it is determined in dependence on vehicle flow whether the pattern includes only a region (B_{S}) of synchronised traffic, or this plus a consecutive upstream region (B_{GS}) of bunched synchronised traffic, or these two regions and a consecutive upstream region (B_{St}) of moving wide jams, **in that** the associated flank positions between the various state phases are determined and **in that** a time- and location-dependent profile of average vehicle speed and/or traffic flow and/or traffic density is assigned to each of the three pattern variants.

5. Method according to any of claims 2 to 4, further
**characterised in that** it is determined for the traffic network in dependence on vehicle flows where and in which chronological sequence overlapping patterns originate, in which chronological and local sequence the regions of "synchronised traffic", "bunched synchronised traffic" and "moving wide jams" originate and develop in each of the overlapping patterns and whether there are overlaps of such regions, and **in that** the chronological and local progress of jams through regions of synchronised traffic and/or bunched synchronised traffic is predicted for each overlap.

6. Method according to claim 4 or 5, further
**characterised in that** the flank positions (F_{R,S}, F_{GS,S}, F_{F,GS}, F_{St,GS}) of the various regions of the pattern of dense traffic and/or the flank positions of jams within various overlapping patterns and/or the appearance of any new overlapping pattern is/are currently estimated in their chronological development and predicted for future points in time.

7. Method according to any of claims 4 to 6, further
**characterised in that** in addition the expected journey time for each individual or overlapping pattern of dense traffic is currently estimated and/or predicted for future points in time.

8. Method according to any of claims 4 to 7, further
**characterised in that** current vehicle flow is detected for each individual or overlapping pattern of dense traffic, **in that** the current positions of the flanks between the various pattern regions are determined and **in that** the most suitable pattern profile is selected from the stored pattern profiles with reference to these current input data and used as a basis for a prediction of the future traffic state in the route section in question.

## Revendications

1. Procédé de surveillance de l'état du trafic sur un réseau routier avec un ou plusieurs étranglements, en particulier sur un réseau de trafic routier, dans lequel
- l'état du trafic est classifié dans une de plusieurs phases d'état correspondantes en tenant compte de données de mesures du trafic enregistrées d'un ou de plusieurs paramètres qui contiennent au moins des informations sur la densité du trafic et/ou la vitesse moyenne des véhicules, lesquelles phases comprennent au moins les phases d'état de "trafic libre" et de "trafic synchronisé",
**caractérisé en ce que**
- l'état de trafic en amont d'un étranglement effectif correspondant du réseau du trafic, lorsqu'une limite (F_{S,F}) qui y est fixée est reconnue entre le trafic libre en aval (B_{F}) et le trafic synchronisé en amont (B_{S}), est classifié comme échantillon représentatif de trafic dense de chaque étranglement effectif correspondant qui contient une ou plusieurs zones différentes (B_{S}, B_{GS}, B_{ST}) se suivant en amont d'une composition de différentes phases d'état, et un profil relatif des paramètres de trafic pris en compte pour l'établissement des phases d'état.

2. Procédé selon la revendication 1, **caractérisé en outre en ce que** l'état du trafic, lorsqu'un échantillon unique de trafic dense tout d'abord constitué à un étranglement effectif relatif atteint un ou plusieurs étranglements effectifs suivants en amont, est classifié sur cette portion de trajet comme échantillon de trafic dense se propageant représentatif pour l'étranglement effectif impliqué, qui comprend comme un échantillon unique correspondant une ou plusieurs zones différentes se suivant en amont d'une composition variée de phases d'état et un profil relatif des paramètres pris en compte pour l'établissement des phases d'état.

3. Procédé selon la revendication 1 ou 2, **caractérisé en outre en ce que** l'échantillon de trafic dense correspondant appartenant à un ou, en tant qu'échantillon se propageant, à plusieurs étranglements effectifs, est déterminé de façon empirique par son profil de paramètres du trafic relatifs au temps et au lieu constitué de données de mesure de trafic relevées, et est enregistré en pouvant être consulté.

4. Procédé selon l'une quelconque des revendications 1 à 3, **caractérisé en outre en ce que** pour chaque étranglement, on détermine en relation étroite avec le flux de véhicules si l'échantillon est constitué seulement d'une zone (B_{S}) de trafic synchronisé, ou de celle-ci et d'une zone d'un trafic synchronisé compressé (B_{GS}) qui s'y adjoint en amont, ou de ces deux zones et d'une zone en amont d'un bouchon étendu en mouvement qui s'y adjoint (B_{ST}), les positions des limites correspondantes entre chaque différente phase d'état correspondante sont déterminées et un profil correspondant relatif au temps et au lieu de la vitesse moyenne des véhicules et/ou du flux de trafic et/ou de la densité du trafic est assigné à chacune des trois variantes d'échantillons.

5. Procédé selon l'une quelconque des revendications 2 à 4, **caractérisé en outre en ce que** pour le réseau de trafic, on détermine en relation étroite avec les flux de véhicules où et dans quel ordre de temps les échantillons se propageant se constituent, dans quel ordre de temps et de lieu les zones "trafic synchronisé", "trafic synchronisé compressé" et "large bouchon en mouvement" ont lieu dans chaque échantillon et se développent, et si des chevauchement de telles zones ont lieu, et pour chaque chevauchement, le déroulement en temps et en lieu de bouchons peut être prévu grâce aux zones de trafic synchronisé et/ou de trafic synchronisé compressé.

6. Procédé selon la revendication 4 ou 5, **caractérisé en outre en ce que** les positions des limites (F_{F,S}, F_{GS,S}, FF_{,GS}, F_{ST,GS}) des différentes zones de l'échantillon correspondant de trafic dense et/ou les positions des limites de bouchons à l'intérieur d'échantillons divers se propageant et/ou l'apparition de chaque nouvel échantillon se propageant sont estimées dans le développement temporel et sont prévues pour des dates futures.

7. Procédé selon l'une quelconque des revendications 4 à 6, **caractérisé en outre en ce que** pour chaque échantillon unique ou se propageant de trafic dense, le temps de voyage correspondant auquel s'attendre est en outre estimé et/ou est prévu pour des dates futures.

8. Procédé selon l'une quelconque des revendications 4 à 7, **caractérisé en outre en ce que** pour chaque échantillon unique ou se propageant de trafic dense, le flux de véhicules actuel est détecté et les positions actuelles des limites entre les différentes zones d'échantillons sont déterminées, et le profil d'échantillon le mieux adapté est choisi parmi les profils d'échantillons enregistrés et une prévision de l'état du trafic futur pour la zone du trajet concernée est fondée à l'aide de ces données d'entrée actuelles.
